# EUROPÄISCHE PATENTSCHRIFT

(11) **EP 1 286 499 B1**
(45) Veröffentlichungstag und Bekanntmachung des Hinweises auf die Patenterteilung: **19.10.2005**
(21) Anmeldenummer: 01440280.4
(22) Anmeldetag: 21.08.2001
(51) Int. Cl.: H04L 12/24, H04Q 3/00, H04M 3/22, H04L 12/26

(54) **Verfahren und Bedienmodul zur Verwaltung eines Netzwerk-Management-Systems**
Method and control module for administrating a network management system
Procédé et module de commande pour administrer un système de gestion de réseau

(43) Veröffentlichungstag der Anmeldung: 26.02.2003
(73) Patentinhaber: ALCATEL, 75008 Paris (FR)
(72) Erfinder: Hain, Elke, 16547 Birkenwerder (DE); Bieber, Petra, 14612 Falkensee (DE)
(74) Vertreter: Rausch, Gabriele

(56) Entgegenhaltungen:
- US-A- 5 913 036
- CARNEIRO V ET AL: "IMPLEMENTATION OF A DISTRIBUTED MANAGEMENT SYSTEM USING JAVA" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY: IEEE, US, Bd. 3, 1998, Seiten 1574-1578, XP000805172 ISBN: 0-7803-4985-7
- CHANG ET AL: "A large scale distributed object architecture-CORBA and COM for real time systems" OBJECT-ORIENTED REAL-TIME DISTRIBUTED COMPUTING, 2000. (ISORC 2000). PROCEEDINGS. THIRD IEEE INTERNATIONAL SYMPOSIUM ON NEWPORT, CA, USA 15-17 MARCH 2000, LOS ALAMITOS, CA, USA,IEEE COMPUT. SOC, US, 15. März 2000 (2000-03-15), Seiten 338-341, XP010378608 ISBN: 0-7695-0607-0

## Beschreibung

Die vorliegende Erfindung betrifft ein Verfahren zur Verwaltung eines Netzwerk-Management-Systems mit Management-Elementen, die mittels Versende-Diskriminatoren Ereignisinformationen versenden können, anhand derer die Management-Elemente und/oder durch diese verwaltete Netzelemente verwaltet werden können. Die Erfindung betrifft ferner ein Bedienmodul sowie ein Antwortmodul hierfür, welche jeweils als Rechner eines Netzwerk-Management-Systems ausgestaltet sein können oder als Programm-Modul für einen derartigen Rechner.

Ein Telekommunikationsnetz oder ein Datennetz kann durch ein Netzwerk-Management-System verwaltet, d.h. gesteuert und/oder überwacht, werden. Jedes Netzelement, bei dem es sich beispielsweise um einen Rechner, eine Vermittlungsstelle, einen Netzwerkdienst oder dergleichen handeln kann, des Telekommunikations- oder Datennetzes wird durch ein Management-Element des Netzwerk-Management-Systems verwaltet. Beim dem Management-Element kann es sich beispielsweise um einen Steuerrechner oder um ein Programmmodul, dessen Programmcode von einem Rechner ausgeführt werden kann, handeln. Einem oder mehreren Management-Elementen kann auch ein überlagertes, diese steuerndes und überwachendes Management-Element, z.B. ein zentraler Steuerrechner, zugeordnet sein. In Bezug auf das oder die jeweils verwaltete(n) Netzelement(e) kann ein Management-Element ein eigenständiges Netzwerk-Management-System bilden. Es kann beispielsweise ein lokales Netzwerk-Management-System sein.

Die Management-Elemente senden einander sogenannte Ereignisinformationen, bei denen es sich sowohl um unkritische Ereignisinformationen, z.B. zyklische Messwert-Informationen, als auch um kritische Ereignisinformationen, z.B. Alarme, Störungsmeldungen oder dergleichen, handeln kann. Zum Versenden der jeweiligen Ereignisinformationen sind bei den Management-Elementen sogenannte Versende-Diskriminatoren vorgesehen, beispielsweise sogenannte AFDs oder EFDs (AFD = Alarm Forwarding Discriminator, EFD = Event Forwarding Discriminator) gemäß der Empfehlungen der International Telecommunication Union (ITU) im Rahmen der Empfehlungsreiche X.700.

Ein Versende-Diskriminator versendet Ereignisinformationen eines Quell-Management-Elements an ein Ziel-Management-Element auf einer Ereignisinformations-Kommunikationsverbindung. Der Versende-Diskriminator kann die Ereignisinformationen anhand von vorbestimmten Filterkriterien für das Ziel-Management-Element filtern.

Solche Netzwerk Management Systeme sind auch zum Beispiel in US Pat. 5,913,036 und in dem Artikel "Implementation of a Distributed Management System using Java", IEEE Global Telecommunications Conference, NY (1998), 3, 1574-1578 beschrieben.

Bei einem Netzwerk-Management-System sind üblicherweise zahlreiche, zumeist unterschiedlich konfigurierte Versende-Diskriminatoren und zahlreiche Ereignisinformations-Kommunikationsverbindungen vorgesehen. Für einen Bediener des Netzwerk-Management-Systems, der beispielsweise an einem in das Netzwerk-Management-System eingeloggten Client-Rechner arbeitet, ist es schwierig, einen Überblick über die Ereignisinformations-Kommunikationsverbindungen zwischen den Management-Elementen des Netzwerk-Management-Systems zu gewinnen.

Es ist daher Aufgabe der Erfindung, die Verwaltung von Management-Elementen eines Netzwerk-Management-Systems, insbesondere die Verwaltung von diesen zugeordneten Versende-Diskriminatoren, zu verbessern.

Diese Aufgabe wird gelöst durch ein Verfahren gemäß der technischen Lehre des Anspruches 1. Ferner sind zur Lösung der Aufgabe ein Bedienmodul nach Anspruch 9, ein Netzwerk-Management-System (NMS) nach Anspruch 13 und ein Computer lesbares Speichermittel nach Anspruch 14 vorgesehen.

Ein Grundgedanke der Erfindung liegt darin, dass ein Bedienmodul des Netzwerk-Management-Systems zumindest für eine Auswahl von Management-Elementen zwischen diesen bestehende Ereignisinformations-Kommunikationsverbindungen anhand von Daten über Versende-Diskriminatoren ermittelt, welche bei den Management-Elementen die jeweiligen Kommunikationsverbindungen bedienen. Bei den Daten handelt es sich beispielsweise um die Art des jeweiligen Versende-Diskriminators, z.B. AFD oder EFD, dessen Status, z.B. in Betrieb / außer Betrieb und das Ziel oder die Ziele an welches bzw. welche der Versende-Diskriminator Ereignisinformationen versendet. Das Bedienmodul gibt die Management-Elemente der Auswahl sowie die zwischen diesen vorhandenen Ereignisinformations-Kommuni-kationsverbindungen als eine Art Karte (englisch "map") an einer Bedienoberfläche des Netzwerk-Management-Systems grafisch aus, wobei die Karte sozusagen ein Ereignisinformations-Netzwerk darstellt. Die Karte kann z.B. nach einem vordefinierten Muster von dem Bedienmodul gestaltet werden und/oder dynamisch erzeugt werden.

Der Bediener der Bedienoberfläche gewinnt auf diese Weise schnell und komfortabel einen Überblick über die Ereignisinformations-Kommunikationsverbindungen zwischen den Management-Elementen.

Vorteilhafte Ausgestaltungen der Erfindung ergeben sich aus den abhängigen Ansprüchen sowie aus der Beschreibung.

Das Bedienmodul visualisiert für eine oder mehrere Ereignisinformations-Kommunikationsverbindungen vorteilhaft mindestens eine Information bezüglich des an der jeweiligen Verbindung beteiligten Versende-Diskriminators an der Karte. Zweckmäßigerweise wird dazu das die Ereignisinformations-KommunikationsVerbindung jeweils darstellende grafische Symbol modifiziert. Beispielsweise kann das Symbol in Abhängigkeit davon, ob es für das Versenden von kritischen oder von unkritischen Ereignisinformationen steht, eine unterschiedliche Farbe aufweisen, beispielsweise rot bzw. grün.

Eine bevorzugte Variante der Erfindung sieht vor, dass eine oder mehrere Kommunikationsverbindungen zwischen zwei Management-Elementen, die von einem oder mehreren AFDs bedient werden, in der Karte jeweils durch eine dicke und/oder rote Linie dargestellt sind und eine oder mehrere Kommunikationsverbindungen, die von einem oder mehreren EFDs bedient werden, jeweils durch eine dünne und/oder grüne Linie dargestellt werden. In Abhängigkeit davon, ob der oder die für eine Kommunikationsverbindung zuständige AFD bzw. EFD "unlocked" oder "locked" ist, sind die Linien beispielsweise durchgezogen oder gestrichelt.

Das Bedienmodul gibt die Management-Elemente zweckmäßigerweise als Symbole für Ereignisinformations-Netzknoten aus. Kommunikationsverbindungen zwischen diesen werden vorteilhaft als Linien ausgegeben. Mittels pfeilartig gestalteter Linien, z.B. Linien mit einem Pfeilende oder mit zwei Pfeilenden, kann die Versenderichtung für die auf einer Kommunikationsverbindung versandten Ereignisinformationen visualisiert werden.

Bei der ein Ereignisinformations-Netzwerk darstellenden Karte werden vorteilhaft im Wesentlichen graphische Symbole verwendet. Es können in diese jedoch auch alphanumerische Zeichen eingetragen sein, beispielsweise die Namen der dargestellten Management-Elemente. Zweckmäßigerweise ist vorgesehen, dass die Daten über die Versende-Diskriminatoren der Management-Elemente zumindest teilweise auch in alphanumerischen Zeichen ausgegeben werden. Hierfür eignen sich vorteilhaft eine tabellarische Form oder eine Listenform. In einer derartigen Liste oder Tabelle können beispielsweise die Daten der Versende-Diskriminatoren eines Management-Elements angegeben sein.

Ausgehend von der durch das Bedienmodul erzeugten Karte können die einem Versende-Diskriminator zugeordneten Daten zweckmäßigerweise modifiziert werden. Dabei werden die vorgenannten Tabellen oder Listen beispielsweise in editierbarer Form ausgegeben, so dass ein Bediener die Daten eines Diskriminators modifizieren kann. Es ist aber auch denkbar, dass ein separates Modifikationsprogramm zur Modifikation von Daten der Versende-Diskriminatoren von der durch das Bedienmodul erzeugten Karte aus gestartet wird.

Prinzipiell können die Management-Elemente sowie die zwischen diesen bestehenden Kommunikationsverbindungen in beliebiger Form auf der Karte dargestellt werden. Beispielsweise kann eine Darstellung gewählt werden, bei der sich möglichst wenige Kommunikationsverbindungen kreuzen. Das Bedienmodul verfügt hierbei vorzugsweise über eine Entflechtungsfunktion, z.B. in der von Layout-Programmen für Elektronik-Platinen bekannten Art.

Vorteilhaft ist jedoch vorgesehen, dass die Management-Elemente in einer hierarchischen Darstellung und/oder in einer funktionalen Darstellung ausgegeben werden. Bei der hierarchischen Darstellung wird beispielsweise eine Management-Hierarchie der Management-Elemente visualisiert. Bei der funktionalen Darstellung wird unterschieden zwischen Ereignisinformations-Quelle oder -Ziel oder -Transitelement. Mischformen zwischen diesen Ausgestaltungen sind möglich. Als Ereignisinformations-Quelle wird ein Management-Element bezeichnet, das Ereignisinformationen versendet, beispielsweise ein Management-Element, dem ein Netzelement zugeordnet ist. Ein Ereignisinformations-Ziel ist beispielsweise ein zentraler Steuerrechner des Netzwerk-Management-Systems. Ein Transit-Element leitet von einer Ereignisinformations-Quelle oder von einem weiteren Transit-Element empfangene Ereignisinformationen an ein Ereignisinformations-Ziel weiter. Ein Transit-Element kann auch gleichzeitig eine Ereignisinformations-Quelle sein, z.B. wenn es zur Verwaltung eines Netzelementes vorgesehen ist.

Für die Ermittlung der Daten über die Versende-Diskriminatoren eignen sich verschiedene Vorgehensweisen:

Vorteilhaft ist vorgesehen, dass das Bedienmodul die Daten über die Versende-Diskriminatoren bei den Management-Elementen selbst abfragt.

Zweckmäßigerweise ist hierfür bei dem Bedienmodul ein Abfrage-Teilmodul vorgesehen. Die Anzeige der ein Ereignisinformations-Netzwerk darstellenden Karte übernimmt ein Anzeige-Teilmodul des Bedienmoduls. Beispielsweise kann das Anzeige-Teilmodul ein Programmmodul sein, das von einem Client-Rechner des Netzwerk-Management-Systems ausgeführt wird, und das Abfrage-Teilmodul ein Programmmodul sein, das von einem Server des Netzwerk-Management-Systems ausgeführt wird.

Die Auswahl der Management-Elemente, für die das Bedienmodul die jeweiligen Ereignisinformations-Kommunikationsverbindungen ermittelt, kann bei dem Bedienmodul vordefiniert sein, z.B. in Form von Konfigurationsdaten, und/oder durch beispielsweise eine Bedienereingabe vorgebbar sein.

Zweckmäßigerweise ist vorgesehen, dass das Bedienmodul Namen und/oder Adressen der Management-Elemente der Auswahl bei einem Nameserver des Netzwerk-Management-Systems abfragt.

Für das Versenden von Daten über mindestens einen Versende-Diskriminator eines Management-Elements kann bei diesem ein Antwort-Modul vorgesehen sein. Zweckmäßigerweise ist dabei vorgesehen, dass sich das Bedienmodul bei dem Antwortmodul authentifiziert und/oder identifiziert, um seine Berechtigung zur Abfrage der Daten über einen oder mehrere Versende-Diskriminatoren nachzuweisen.

Das Antwortmodul meldet an das Bedienmodul die Daten über mindestens einen Versende-Diskriminator des Management-Elements, dem das Antwortmodul zugeordnet ist. Es ist aber auch möglich, dass das Antwortmodul bei weiteren Management-Elementen die Daten über deren jeweilige Versende-Diskriminatoren sozusagen im Auftrag des Bedienmoduls abfragt.

Das Bedienmodul und das Antwortmodul können durch individuelle Baueinheiten des Netzwerk-Management-Systems gebildet werden, beispielsweise durch geeignete Rechner. Beide Module sind jedoch vorzugsweise als Programmmodule ausgestaltet, deren Programmcode von Rechnern des Netzwerk-Management-Systems ausgeführt werden kann.

Im Folgenden wird die Erfindung anhand mehrerer Ausführungsbeispiele unter Zuhilfenahme der Figuren erläutert. Es zeigen:

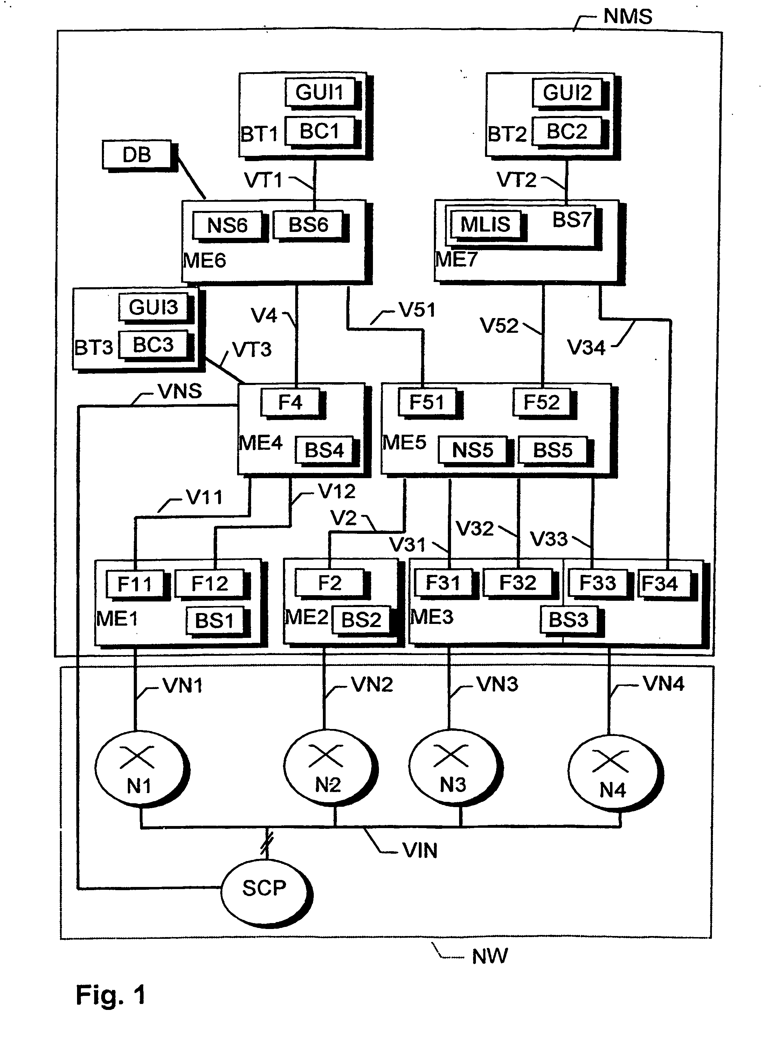

- Figur 1: ein Netzwerk-Management-System NMS, das ein Netzwerk NW verwaltet und mit dem das erfindungsgemäße Verfahren durchführbar ist,

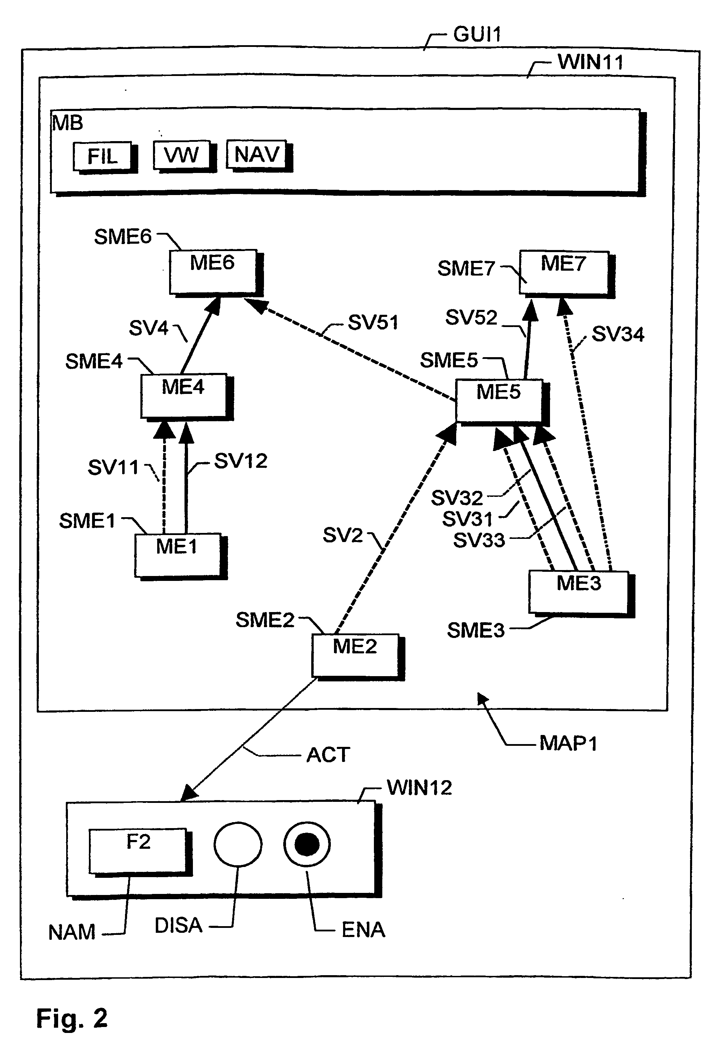

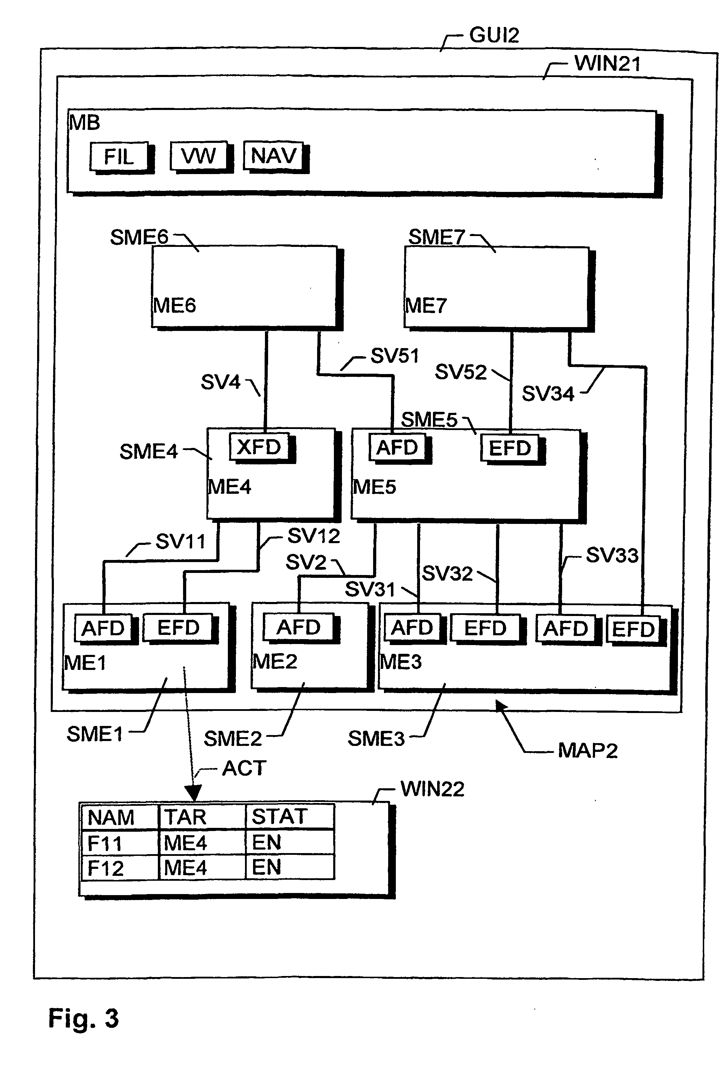

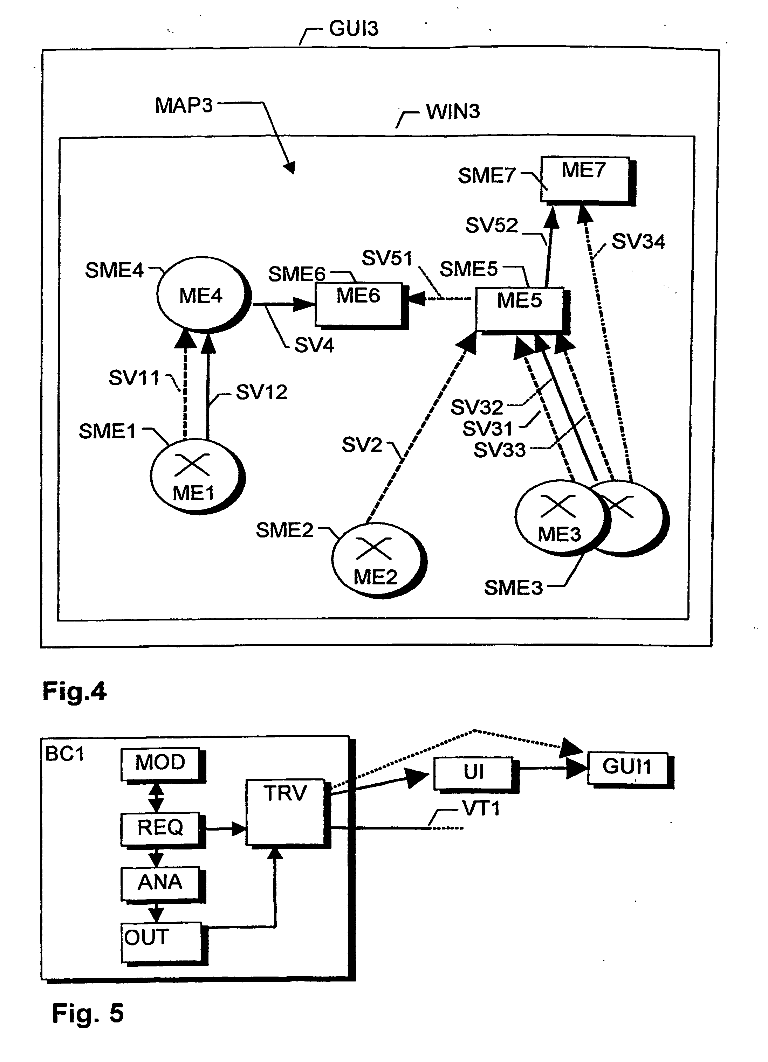

- Figuren 2 bis 4: graphische Bedienoberflächen GUI1-GUI3 auf denen efindungsgemäße Karten MAP1 - MAP3 dargestellt sind,
- Figur 5: ein erfindungsgemäßes Bedienmodul BC1,
- Figuren 6, 7: erfindungsgemäße Antwortmodule BS3 bzw. BS5,
- Figur 8: ein Bedienterminal BT1 des Netzwerk-Management-Systems NMS gemäß Figur 1 in schematischer Ansicht,
- Figur 9: ebenfalls in schematischer Ansicht ein Management-Element ME6 des Netzwerk-Management-Systems NMS gemäß Figur 1.

Das Netzwerk-Management-System NMS dient zur Verwaltung, insbesondere Steuerung und Überwachung, des Netzwerkes NW, bei dem es sich beispielsweise um ein Rechner- und/oder Telekommunikations-Netzwerk handelt. Im vorliegenden Fall ist das Netzwerk NW als sogenanntes Intelligentes Netz (IN) ausgestaltet und enthält Netzelemente N1 - N4, bei denen es sich beispielsweise um Vermittlungsstellen handelt und die beispielhaft für weitere, nicht dargestellte Netzelemente stehen. Den Netzelementen N1 - N4 ist ein zentraler Dienstrechner SCP (Service Control Point) zugeordnet, mit dessen Unterstützung die Netzelemente N1 - N4 für an das Netzwerk NW angeschlossene, nicht dargestellte Teilnehmereinrichtungen Dienst eines sogenannten Intelligenten Netzes erbringen können. Der Dienstrechner SCP und die Netzelemente N1 - N4 kommunizieren über ein Dienst-Netzwerk VIN.

Das Netzwerk-Management-System NMS, im Folgenden kurz Management-System NMS genannt, enthält Management-Elemente ME1 - ME7 sowie Bedienterminals BT1 - BT3. Bei den Management-Elementen ME1 - ME7 kann es sich um Programmmodule handeln, deren Programmcode von Rechnern, beispielsweise Servern, des Management-Systems NMS ausgeführt werden kann. Vorliegend sind die Management-Elemente ME1 - ME7 jedoch jeweils separate Server, die zur Verwaltung von einem oder mehreren Netzelementen und/oder einem oder mehreren Management-Elementen vorgesehen sind:

Die Management-Elemente ME1 und ME2 sind zur Verwaltung der Netzelemente N1 bzw. N2 vorgesehen und mit diesen über Verbindungen VN1 bzw. VN2 verbunden. Das Management-Element ME3 ist zur Verwaltung der Netzelemente N3 und N4 vorgesehen und mit diesen über Verbindungen VN3 bzw. VN4 verbunden. Das Management-Element ME4 steuert und überwacht über eine Verbindung VNS den Dienstrechner SCP. Zusätzlich dient das Management-Element ME4 als Transitknoten oder -element zur Weiterleitung von Ereignisinformationen, die das Management-Element ME1 an das Management-Element ME6 sendet. Es ist auch möglich, dass das Management-Element ME4 zur Steuerung und/oder Überwachung des Management-Elements ME1 bzw. des Netzelements N1 ausgestaltet ist.

Das Management-Element ME5 ist den Management-Elementen ME2 und ME3 zugeordnet und erhält von diesen Ereignisinformationen. Diese leitet es in einer Funktion als Transit-Element an die Management-Elemente ME6 und ME7 weiter. Auch das Management-Element ME5 kann zur Steuerung und/oder Überwachung der Management-Elemente ME2 und/oder ME3 bzw. der an diese jeweils angeschlossenen Netzelemente N2 bzw. N3, N4 vorgesehen sein.

Die Management-Elemente ME6 und ME7 sind zentrale Steuerrechner des Management-Systems NMS und sind den Management-Elementen ME4 und ME5 hierarchisch überlagert.

Über die Bedienterminals BT1, BT2 und BT3 kann das Management-System NMS durch einen oder mehrere Bediener bedient werden. Die Bedienterminals BT1 - BT3 sind sogenannte Client-Rechner, an denen Bedienoberflächen GUI1, GUI2 bzw. GUI3 zur Bedienung des Management-Systems NMS bereitgestellt werden. Bei der gezeigten Konfiguration ist das Bedienterminal BT1 über eine Verbindung VT1 mit dem Management-Element ME6, das Bedienterminal BT2 über eine Verbindung VT2 mit dem Management-Element ME7 und das Bedienterminal BT3 über eine Verbindung VT3 mit dem Management-Element ME4 verbunden. An dieser Stelle sei angemerkt, dass nur einige der zahlreichen logischen und physikalischen Verbindungen des Netzwerk-Management-Systems NMS gezeigt sind. Die Management-Elemente ME1 - ME7 sowie die Bedienterminals BT1 - BT3 sind über ein internes, nicht gezeigtes Netzwerk des Management-Systems NMS, beispielsweise ein LAN oder WAN (LAN = Local Area Network, WAN = Wide Area Network), miteinander verbunden.

Im Rahmen seiner Steuerungs- und/oder Überwachungstätigkeit für das Netzelement N1 erhält das Management-Element ME1 von diesem Ereignismeldungen, beispielsweise Alarme, Störungsmeldungen, Lastmesswerte oder dergleichen. Diese Ereignisinformationen werden von Versende-Diskriminatoren F11 und F12 des Management-Elements ME1 über Verbindungen V11 bzw. V12 an das Management-Element ME4 gemeldet. Die Versende-Diskriminatoren F11 und F12 üben zusätzlich eine Filterfunktion aus, d.h. sie versenden nur für das Management-Element ME4 relevante Ereignisinformationen an dieses. Dafür sind bei den Versende-Diskriminatoren F11, F12 nicht dargestellte Filterkriterien vordefiniert. Der Versende-Diskriminator F11 versendet beispielsweise nur kritische Ereignisinformationen, der Versende-Diskriminator F12 nur unkritische Ereignisinformationen. Beispielsweise handelt es sich bei dem Versende-Diskriminator F11 um einen sogenannten AFD und bei dem Versende-Diskriminator F12 um einen sogenannten EFD jeweils gemäß der Definitionen der ITU.

Das Management-Element ME4 erfüllt mehrere Funktionen: es dient als TransitKnoten für Ereignisinformationen des Management-Elements ME1, die an das Management-Element ME6 weiterzuleiten sind. Ferner dient das Management-Element ME4 zur Steuerung und/oder Überwachung eines Netzelementes, vorliegend des Diensterechners SCP. Zudem kann das Management-Element ME1 über das Management-Element ME4 gesteuert und/oder überwacht werden. Für das Versenden von Ereignisinformationen, beispielsweise betreffend das Management-Element ME1 und/oder das Netzelement SCP, ist beim Management-Element ME4 der Versende-Diskriminator F4 vorgesehen, der sowohl kritische als auch unkritische Ereignisinformationen versendet. Der Versende-Diskriminator ist beispielsweise ein kombinierter AFD und EFD. Zu Steuerungs- und/oder Überwachungszwecken ist das Bedienterminal BT3 mit dem Management-Element ME4 verbindbar.

Die Management-Elemente ME2 und ME3 senden Ereignisinformationen an das Management-Element ME5.

Bei dem Management-Element ME2 ist ein Versende-Diskriminator F2 vorgesehen, der über eine Verbindung V2 Ereignisinformationen, vorliegend Alarmmeldungen, an das Management-Element ME5 sendet. Bei dem Versende-Diskriminator F2 handelt es sich beispielsweise um einen sogenannten AFD.

Das Management-Element ME3 empfängt von den Netzelementen N3 und N4 Ereignisinformationen in Form von Ereignismeldungen. Für Ereignisinformationen des Netzelements N3 sind beim Management-Element ME3 Versende-Diskriminatoren F31 und F32 vorgesehen, bei denen es sich z.B. um einen AFD bzw. einen EFD handelt und die über Verbindungen V31 bzw. V32 Ereignisinformationen an das Management-Element ME5 senden. Der Versende-Diskriminator F31 versendet kritische Ereignisinformationen, der Versende-Diskriminator F32 unkritische Ereignisinformationen. Für die Ereignisinformationen des Netzelements N4 sind beim Management-Element M3 Versende-Diskriminatoren F33 und F34 vorgesehen. Der Versende-Diskriminator F33 versendet kritische Ereignisinformationen des Netzelements N4 über eine Verbindung V33 an das Management-Element M5 und ist beispielsweise ein sogenannter AFD. Der Versende-Diskriminator F34, bei dem es sich beispielsweise um einen sogenannten EFD handelt, versendet unkritische Ereignisinformationen des Netzelements N4 über eine Verbindung V34 an das Management-Element ME7.

An das Management-Element ME5 ist im Unterschied zum Management-Element ME4 kein lokal zu steuerndes und/oder zu überwachendes Netzelement angeschlossen. Das Management-Element ME5 dient ausschließlich als Transit-Element zur Weiterleitung von Ereignisinformationen der Management-Elemente ME2, ME3 an die Management-Elemente ME6 und ME7. Prinzipiell ist es aber auch denkbar, dass mittels des Management-Elements ME5 die Management-Elemente ME2, ME3 bzw. die an diese angeschlossene Netzelemente N2 - N4 steuer- und/oder überwachbar sind. Vorliegend sendet das Management-Element ME5 mittels eines Versende-Diskriminators F51 kritische Ereignisinformationen über eine Verbindung V51 an das Management-Element ME6 und unkritische Ereignisinformationen über eine Verbindung V52 an das Management-Element ME7. Der Versende-Diskriminator F51 ist beispielsweise ein AFD, der Versende-Diskriminator F52 ein EFD.

Die innerhalb des Management-Systems NMS gezeigten Verbindungen V11, V12 - V52, VT1 - VT3 sind logische Verbindungen. Neben diesen können auch weitere, nicht gezeigte Verbindungen zwischen den Management-Elementen ME1 - ME7 und den Bedienterminals BT1 - BT3 vorhanden sein. Die Verbindungen V11, V12 - V52 sind Ereignisinformations-Kommunikationsverbindungen und stehen beispielhaft für weitere, nicht gezeigte Ereignisinformations-Kommunikationsverbindungen zwischen den Management-Elementen ME1 - ME7 sowie weiteren, nicht gezeigten Ereignisinformations-Kommunikationsverbindungen. Vereinfachend ist zudem für jede Kommunikationsverbindung jeweils nur ein Versende-Diskriminator gezeigt. Prinzipiell kann ein Versende-Diskriminator jedoch auch mehrere Ereignisinformations-Kommunikationsverbindungen bedienen. Zudem sind bei den Management-Elementen ME1 - ME7 nur einige Versende-Diskriminatoren gezeigt. Prinzipiell ist es auch möglich, dass bei einem Management-Element kein Versende-Diskriminator vorhanden ist oder eine beliebige Anzahl von Versende-Diskriminatoren. In jedem Fall ist es für einen Bediener des Management-Systems NMS bereits bei der gezeigten Konfiguration schwierig, einen Überblick über die Ereignisinformations-Kommunikationsverbindungen und/oder über die vorhandenen Versende-Diskriminatoren zu gewinnen.

Um dem Bediener diesbezüglich die Arbeit zu erleichtern, sind bei dem Management-System NMS erfindungsgemäße Bedienterminals BT1 - BT3 vorgesehen, die mit erfindungsgemäßen Bedienmodulen BC1, BC2 bzw. BC3 ausgestattet sind. Die Bedienmodule BC1 - BC3 wirken mit Antwortmodulen BS1 - BS7 zusammen, die bei den Management-Elementen ME1 - ME7 vorgesehen sind. Bei den Bedienmodulen BC1 - BC3 sowie bei den Antwortmodulen BS1 - BS7 handelt es sich vorliegend um Programmmodule, deren Programmcode von Steuermitteln, beispielsweise Prozessoren, der Bedienterminals BT1 - BT3 bzw. von Steuermitteln der Management-Elemente ME1 - ME7 ausgeführt werden kann. Prinzipiell ist es jedoch auch möglich, dass die Bedienmodule und/oder die Antwortmodule zumindest teilweise in Hardware ausgeführt sind, und beispielsweise durch die Bedienterminals BT1 - BT3 bzw. die Management-Elemente ME1 - ME7 gebildet werden.

Die Bedienmodule BC1 - BC3 erhalten von den Management-Elementen ME1-ME7 Daten über die jeweils dort vorhandenen Versende-Diskriminatoren F11, F12, F2, F31, F32, F33, F34, F4, F51 und F52. Prinzipiell ist es zwar denkbar, dass die Management-Elemente ME1 - ME7 die Daten über ihre jeweiligen Versende-Diskriminatoren spontan, d.h. ohne vorherige Abfrage, an die Bedienmodule BC1 - BC3 oder an eine sonstige Einrichtung des Management-Systems NMS, beispielsweise eine zentrale Datenbank, melden. Bei der vorliegenden Konfiguration jedoch fragen die Bedienmodule BC1 - BC3 bei den Antwortmodulen BS1 - BS7 die jeweiligen Daten über vorhandene Versende-Diskriminatoren ab. Beantwortet werden die Fragen von den Antwortmodulen BS1 - BS7. Aus den von den Antwortmodulen BS1 - BS7 übermittelten Daten über die Versende-Diskriminatoren F11 - F52 ermitteln die Bedienmodule BC1, BC2 oder BC3 zumindest teilweise die Ereignisinformations-Kommunikationsverbindungen V11, V12, V2, V31, V32, V33, V34, V4, V51 und V52 sowie die an diesen jeweils beteiligten Management-Elemente ME1 - ME7.

Diese ermittelten Daten gibt das Bedienmodul BC1 an einer Bedienoberfläche GUI1 des Bedienterminals BT1, das Bedienmodul BC2 an einer Bedienoberfläche GUI2 des Bedienterminals BT2 und das Bedienmodul BC3 an einer Bedienoberfläche GUI3 des Bedienterminals BT3 jeweils in der Art einer ein Ereignisinformations-Netzwerk darstellenden Karte MAP1, MAP2 bzw. MAP3 aus.

Sowohl bei der Abfrage der Daten über Versende-Diskriminatoren als auch bei der kartenartigen Ausgabe eines Ereignisinformations-Netzwerkes sind vielfältige Varianten möglich, von denen im Folgenden einige vorgestellt werden.

Ein Bediener des Management-Systems NMS aktiviert beispielsweise an der Bedienoberfläche GUI1 des Bedienterminals BT1 das Bedienmodul BC1. Beispielsweise macht der Bediener an einem Startfenster der Bedienoberfläche GUI1 eine entsprechende Bedienereingabe, worauf das Bedienmodul BC1 z.B. in den Vordergrund der Bedienoberfläche GUI1 tritt und/oder das Bedienterminal BT1 den Programmcode des Bedienmoduls BC1 auszuführen beginnt.

Das Bedienmodul BC1 sendet mit Abfrage- und/oder Verbindungsmitteln, beispielsweise einer Abfragefunktion REQ, die auch als ein separates Abfrage-Teilmodul ausgestaltet sein kann, bzw. einer Verbindungsfunktion TRV, an das Antwortmodul BS6 eine Abfrage zur Ermittelung über die im Management-System NMS vorhandenen Versende-Diskriminatoren. Die vorliegende Abfrage betrifft alle im Management-System NMS vorhandenen Management-Elemente. Prinzipiell ist es aber auch möglich, dass nur für eine Auswahl von Management-Elementen die jeweiligen Versende-Diskriminatoren ermittelt werden sollen.

Es kann vorgesehen sein, dass das Bedienterminal BT1 und/oder das Bedienmodul BC1 sich bei dem Management-Element ME6 und/oder bei dem Antwortmodul BS6 sozusagen einloggen müssen, wobei vorzugsweise eine Identifizierungs- und/oder Authentifizierungsprozedur durchlaufen wird.

Auf die Abfrage des Bedienmoduls BC1 hin ermittelt das Antwortmodul BS6 die im Management-System NMS vorhandenen Management-Elemente. Die Namen und/oder Adressen der Management-Elemente können bei dem Antwortmodul BS6 gespeichert sein, beispielsweise in Form von Konfigurationsdaten. Vorliegend jedoch fragt das Antwortmodul BS6 die jeweiligen Daten bei einem sogenannten Nameserver NS6 ab, bei dem es sich vorliegend um ein Programmmodul handelt, das von dem Management-Element ME6 ausgeführt wird. Ferner ist es denkbar, dass das Antwortmodul BS6 die Namen und/oder Adressen der Management-Elemente des Management-Systems NMS aus einer separaten Datenbank abfragt, beispielsweise einer Datenbank DB. In der Datenbank DB sind z.B. zentral Daten des Management-Systems NMS abgelegt und durch dessen Elemente abfragbar. Das Antwortmodul BS6 baut daraufhin Verbindungen zu den Management-Elementen ME4 und ME5 auf und beauftragt diese, die Daten über die Versende-Diskriminatoren der mit ihnen jeweils verbundenen Management-Elemente zu ermitteln. Das Management-Element ME4 bzw. dessen Antwortmodul BS4 sendet daraufhin eine entsprechende Abfrage an das Management-Element ME1. Ein Antwortmodul BS1 des Management-Elements ME1 sendet daraufhin die entsprechenden Daten über die Versende-Diskriminatoren F11 und F12 an das Antwortmodul BS4. Dieses sendet diese Daten sowie die Daten über den Versende-Diskriminator F4 des Management-Elements ME4 an das Antwortmodul BS6.

Ein Antwortmodul BS5 des Management-Elements ME5 sendet auf die Abfrage des Antwortmoduls BS6 die Versende-Diskriminatoren F51 und F52 betreffende Daten F51 D und F52D mit Antwortmitteln ANS, beispielsweise einer Antwortfunktion an das Antwortmodul BS6. Das Antwortmodul BS5 ferner ermittelt mit Hilfe eines Nameservers NS5 des Management-Elements ME5, welche Management-Elemente mit dem Management-Element ME5 verbunden sind. Vorliegend sind das die Management-Elemente ME2, ME3 und ME7. Entsprechend sendet das Antwortmodul BS5 mit Abfragemittel ASK, beispielsweise einer Abfragefunktion, Abfragen an die Management-Elemente ME2, ME3 und ME7, beispielsweise an deren Antwortmodule BS2, BS3 bzw. BS7, um die Daten - oder zumindest einen Teil der Daten - über die bei den Management-Elementen ME2, ME3 bzw. ME7 jeweils vorhandenen Versende-Diskriminatoren zu ermitteln.

Auf die entsprechende Abfrage sendet das Antwortmodul BS2 Daten über den Versende-Diskriminator F2 und das Antwortmodul BS3 mittels Antwortmitteln ANS, beispielsweise einer Antwortfunktion, Daten F31D, F32D, F33D, F34D, die die Versende-Diskriminatoren F31, F32 F33 bzw. F34 betreffen. Bei den Daten über Versende-Diskriminatoren, beispielsweise den Daten F31D, ist beispielsweise die Art des Versende-Diskriminators, z.B. AFD oder EFD, der Name des Versende-Diskriminators, das Ziel, an das der Versende-Diskriminator Ereignisinformationen sendet, seinen Status ("disabled", "enabled", "locked" oder "unlocked"), oder dergleichen.

Beim Management-Element ME7 ist kein Versende-Diskriminator vorgesehen. Dementsprechend sendet das Antwortmodul BS7 eine Antwort, in der angegeben ist, dass beim Management-Element ME7 keine Versende-Diskriminatoren vorhanden sind.

Die von den Management-Elementen ME4 und ME5 7 erhaltenen Daten über Versende-Diskriminatoren meldet das Antwortmodul BS6 an das Bedienmodul BC1, welches aus diesen Daten sozusagen ein Ereignisinformations-Netzwerk des Management-Systems NMS ermittelt.

Beim vorgenannten Beispiel wurden die Abfragen betreffend Versende-Diskriminatoren sozusagen kaskadenartig oder in einer Art Schneeballsystem zwischen den Management-Elementen ME1 - ME7 versandt, wobei ein Management-Element jeweils seine benachbarten und/oder hierarchisch überlagerten und/oder unterlagerten Management-Elemente nach deren jeweiligen Versende-Diskriminatoren fragt. Prinzipiell ist es aber auch möglich und in einer bevorzugten Variante vorgesehen, dass ein Bedienmodul und/oder ein diesem zugeordnetes Antwortmodul, beispielsweise das Bedienmodul BC1 bzw. das Antwortmodul BS6 des Management-Elements ME6, die Daten über die jeweiligen Versende-Diskriminatoren bei den Management-Elementen ME1 - ME5, ME7 direkt - ohne Mitwirkung zwischengeschalteter Antwortmodule - abfragt. Ferner ist es möglich, dass das Bedienmodul BC1 die Funktionalität des Antwortmoduls BS6 aufweist. Das Bedienmodul BC1 verfügt bei einer solchen Ausgestaltung über Abfragemittel, mit denen es bei einer Auswahl von Management-Elementen, gegebenenfalls bei allen Management-Elementen des Netzwerk-Management-Systems NMS Daten über deren jeweilige Versende-Diskriminatoren abfragen kann.

Aus den Daten über die Versende-Diskriminatoren ermitteln die Analysemittel ANA des Bedienmoduls BC1 die Kommunikationsverbindungen V11, V12 - V52 zwischen den Management-Elementen ME1 - ME7 und gibt die derart ermittelten Daten an Ausgabemittel OUT, die auch als ein separates Ausgabe-Teilmodul ausgestaltet sein können, weiter, die aus diesen Daten die Karte MAP1 erzeugen und an der Bedienoberfläche GUI1 in Form eines Fensters WIN11 ausgeben. Wenn das Bedienterminal BT1 beispielsweise über eine sogenannte X-Window-Umgebung verfügt, kann das Fenster WIN11 beispielsweise durch X-Window-Funktionen des Bedienmoduls BC1 erzeugt werden. Es ist aber auch möglich, dass das Bedienmodul BC1 ein geeignetes Bedienoberflächenmodul, beispielsweise das Bedienoberflächenmodul UI, mit der Ausgabe der Karte MAP1 beauftragt. Bei dem Bedienoberflächenmodul UI handelt es sich beispielweise um einen Browser, der zur Ausgabe von Graphikdaten und/oder von Daten in einer sogenannten Markup-Language geeignet ist, z.B. der HTML (Hypertext Markup Language). Es versteht sich, dass Kombinationen beider Ausgabeformen möglich sein, wie im Folgenden deutlich wird. Dabei wird das Fenster WIN11 von dem Bedienmodul BC1 selbst erzeugt und das Fenster WIN12 von dem Bedienoberflächenmodul UI.

Das Fenster WIN11 zeigt die Karte MAP1 mit graphischen Darstellungen oder Symbolen SME1 - SME7 der Management-Elemente ME1 - ME7. Ferner ist bei dem Fenster WIN11 eine Menüleiste und/oder Buttonleiste MB vorgesehen, mit der verschiedene Funktionen des Bedienmoduls BC1 aktivierbar sind. Beispielsweise ist ein Menü und/oder Button FIL vorgesehen, mit dem das Fenster WIN11 geschlossen und/oder die Karte MAP1 in einer Datei gespeichert werden kann. Ferner ist ein Menü oder Button VW vorgesehen, über den unterschiedliche Darstellungsformen der Karte MAP1 abrufbar sind. Der Menüpunkt VW kann auch dafür vorgesehen sein, die Karte MAP1 sozusagen zu aktualisieren, wobei erneut Abfragen über die Versende-Diskriminatoren an die Management-Elemente ME1 - ME7, wie oben bereits erläutert, versendet werden. Über ein Menü NAV kann zu anderen Fenstern und/oder Applikationen der Bedienoberfläche GUI1 navigiert werden.

Für die Ereignisinformations-Kommunikationsverbindungen V11, V12, V2, V31, V32, V33, V34, V4, V51, V52 sind diese graphisch darstellende Symbole SV11, SV12, SV2, SV31, SV32, SV33, SV34, SV4, SV51 bzw. SV52 bei der Karte MAP1 dargestellt. Die Symbole SV11 - SV52 sind bei der Karte MAP1 Linien mit einem Pfeilende, welches die Versenderichtung der jeweils versandten Ereignisinformationen darstellt. Jedes Symbol SV11 - SV52 symbolisiert dabei jeweils einen Versende-Diskriminator F11 - F52. Zudem zeigen die Symbole SV11 - SV52 den Typ des jeweiligen Versende-Diskriminators an: Eine durchgehende Linie steht für einen EFD, eine gestrichelte Linie für einen AFD. Es ist auch denkbar, den Typ einer Kommunikationsverbindung zugeordneten Versende-Diskriminators durch unterschiedliche Farbe und/oder unterschiedliche Linienstärke des jeweils zugeordneten Symbols zu visualisieren. Ferner könnte ein Symbol auch animiert sein, beispielsweise könnte ein Symbol, das eine von einem AFD ausgehende Kommunikations-Verbindung darstellt, blinken.

Auch weitere Informationen bezüglich eines Versende-Diskriminators können an der Karte MAP1 graphisch verdeutlicht sein. Beispielsweise ist der Versende-Diskriminator F34 in einem Zustand "locked", bei dem er keine Ereignisinformationen sendet. Diesem Zustand entsprechend ist das Symbol SV34 der Kommunikationsverbindung V34 eine strichpunktierte Linie. Es wäre auch denkbar, das für eine oder mehrere gesperrte und/oder inaktive Kommunikationsverbindungen stehende Symbol SV34 optisch in den Hintergrund treten zu lassen, beispielsweise durch eine Darstellung in einer verhältnismäßig neutralen, z.B. grauen, Farbe.

Aus Gründen der Übersichtlichkeit kann vorgesehen sein, dass jedes der Symbole SV11, SV12, SV2, SV31, SV32, SV33, SV34, SV4, SV51 und SV52 bei der Karte MAP1 jeweils für mehrere Kommunikationsverbindungen und/oder mehrere Versende-Diskriminatoren steht. Dabei ist es bevorzugt, dass jeweils ein Symbol SV11, SV12, SV2, SV31, SV32, SV33, SV34, SV4, SV51 und SV52 für einen oder mehrere Versende-Diskriminatoren gleichen Typs steht, das heißt, beispielsweise ein Symbol für mehrere AFDs und ein Symbol für mehrere EFDs. Wenn bei einem Symbol SV11, SV12, SV2, SV31, SV32, SV33, SV34, SV4, SV51 und SV52 alle zugeordneten Versende-Diskriminatoren in einem vorbestimmten Zustand sind, beispielsweise "locked" sind, ändert das Symbol sein Aussehen, ist beispielsweise eine strichpunktierte Linie, wie z.B. das Symbol SV34. Bereits wenn nur einer der einem gemeinsamen Symbol zugeordneten Versende-Diskriminatoren nicht in diesem vorbestimmten Zustand ist, also beispielsweise "unlocked" ist, zeigt das Symbol für alle zugeordneten Versende-Diskriminatoren diesen Zustand. Das Symbol SV34 wäre beispielsweise eine durchgezogene Linie, wenn es nicht nur den "locked"-Versende-Diskriminator F34 repräsentieren würde, sondern auch einen nicht dargestellten zweiten, Ereignisinformationen an das Management-Element ME7 sendenden Versende-Diskriminator im Zustand "unlocked".

Über das Menü VW können verschiedene Ansichten der Karte MAP1 aktiviert werden, beispielsweise die vorliegende Ansicht, bei der alle Kommunikationsverbindungen zwischen den Management-Elementen ME1 - ME7 gezeigt sind oder zwei weiteren, nicht dargestellten Ansichten, bei denen jeweils entweder die von AFDs oder die von EFDs bedienten Kommunikationsverbindungen gezeigt sind.

Ausgehend vom Fenster WIN11 können auch Detailinformationen zu den Versende-Diskriminatoren der Management-Elemente ME1 - ME7 abgerufen werden. Beispielsweise über das Menü NAV und/oder durch Aktivierung eines Symbols auf der Karte MAP1 wird das Fenster WIN12 aktiviert, d.h., das Bedienmodul BC1 erzeugt das Fenster WIN12 erstmals oder das zunächst im Hintergrund der Bedienoberfläche GUI1 stehende Fenster WIN12 wird bei der Aktivierung in den Vordergrund geblendet. Beispielsweise wird bei Aktivierung ACT des Symbols SME2 und/oder des Symbols SV2, z.B. mittels eines Mausklicks oder einer Tastatureingabe, das Fenster WIN12 gestartet, welches Daten über den Versende-Diskriminator F2 des Management-Elements ME2 ausgibt. Beispielsweise wird als Name NAM des Versende-Diskriminators F2 "F2"angezeigt. Ferner wird dessen Status "disabled" oder "enabled" in Auswahlfeldem DISA bzw. ENA ausgegeben. Das Auswahlfeld ENA ist durch einen Punkt markiert, d.h., der Versende-Diskriminator F2 ist "enabled".

Mit dem Bedienmodul BC1 in der vorliegenden Ausgestaltung können Daten von Versende-Diskriminatoren auch modifiziert werden. Beispielsweise kann von dem ausgehend von der Karte MAP1 gestarteten Fenster WIN12 der Status des Versende-Diskriminators F2 geändert werden. Beispielsweise kann durch eine Bedienereingabe das Auswahlfeld DISA markiert werden, wobei die Markierung im Auswahlfeld ENA automatisch verschwindet. Modifikationsmittel MOD des Bedienterminals BC1 erfassen diese Veränderung und senden über die Verbindungsmittel TRV entsprechende Modifikationsbefehle an das Management-Element ME2.

Das von der Bedienoberfläche GU12 aus startbare Bedienmodul BC2 des Bedienterminals BT2 zeigt eine weitere Variante der Erfindung, ist jedoch in seinen Grundfunktionen gleichartig aufgebaut wie das bereits erläuterte Bedienmodul BC1.

Bei einer Bedienereingabe oder einer zyklischen Aktualisierung sendet das Bedienmodul BC1 eine Abfrage über Daten von Versende-Diskriminatoren des Management-Systems NMS an das Antwortmodul BS7. Dieses ermittelt anhand interner Daten MLIS, die beispielsweise Konfigurationsdaten sind, die im Management-System NMS vorhandenen Management-Elemente und sendet an diese Abfragen über deren Versende-Diskriminatoren. Auch hierbei kann die entsprechende Abfrage kaskadenförmig an die Management-Elemente ME4 und ME5 und von diesen ausgehend weiter an die Management-Elemente ME6, ME1, ME2, ME3 versandt werden. Es ist aber auch möglich, dass das Antwortmodul BS7 unmittelbar an die Management-Elemente ME1 - ME6 eine entsprechende Abfrage nach Daten über deren jeweilige Versende-Diskriminatoren sendet.

Aus den von den Management-Elementen ME1 - ME6 erhaltenen Daten über deren Versende-Diskriminatoren erzeugt das Bedienmodul BC2 an der Bedienoberfläche GUI2 zunächst ein Fenster WIN21. Ebenso wie das Fenster WIN12 des Bedienmoduls BC1 enthält auch das Fenster WIN21 eine Menüleiste MB, die in etwa gleich aufgebaut ist und/oder funktioniert wie die gleichnamige Menüleiste MB des Fensters WIN11. Ferner enthält das Fenster WIN21 die Karte MAP2, die eine weitere Ausgabeform für das Ereignisinformations-Netzwerk des Management-Systems NMS zeigt. Die Symbole SME1 - SME7 für die Management-Elemente ME1 - ME7 sind wie die gleichnamigen Symbole der Karte MAP1 abstrakte geometrische Darstellungen, die jedoch zumindest teilweise bei der Karte MAP2 anders gestaltet sind als bei der Karte MAP1.

In diesem Zusammenhang sei erwähnt, dass die die Management-Symbole ME1-ME7 repräsentierenden Symbole SME1-SME7 an den jeweiligen Karten MAP1, MAP2 durch farbliche und/oder geometrische oder eine sonstige visuell erfassbare Gestaltung eine Funktion und/oder einen Zustand des jeweils zugeordneten Management-Elements wiedergeben können.

Die Symbole SME1 - SME7 sind bei der Karte MAP2 in einer hierarchischen Weise angeordnet. Bei der Karte MAP2 gibt die Hierarchie zugleich die hierarchische Steuer- und Überwachungs-Funktion der Management-Elemente ME1 - ME7 wieder. Es ist aber auch möglich, dass eine Karte mit einer rein funktionalen, nicht hierarchischen Darstellung ausgegeben wird.

Zugleich verdeutlicht die Hierarchie bei der Karte MAP2 auch die Richtung, in welcher Ereignisinformationen übermittelt werden: vorliegend von unten nach oben. Daher sind die Symbole SV11 - SV52 bei der Karte MAP2 lediglich einfache Linien, ohne eine die jeweilige Übertragungsrichtung verdeutlichende Komponente, beispielsweise eine Pfeilspitze. Ferner sind bei der Karte MAP2 mit "AFD", "EFD" oder "XFD" bezeichnete Symbole für die Versende-Diskriminatoren F11 - F52 bei den Management-Elementen ME1 - ME5 dargestellt. Jedes der Symbole "AFD", "EFD" oder "XFD" kann jeweils für einen oder mehrere AFDs, EFDs bzw. kombinierte AFDs und EFDs stehen. In diesem Zusammenhang soll auch erwähnt sein, dass jedes Symbol SV11 - SV52 für eine oder mehrere Ereignisinformations-Kommunikationsverbindungen stehen kann.

Auch vom Fenster WIN21 aus sind Detailinformationen über Versende-Diskriminatoren abrufbar. Beispielsweise kann bei einer Aktivierung ACT des Symbols SME1 das Fenster WIN22 gestartet werden. Das Bedienmodul BC2 sendet in diesem Fall beispielsweise eine Tabelle an einen Browser, z.B. einen Netscape Navigator oder einen Microsoft Internet Explorer, oder erzeugt selbst das Fenster WIN22. In der Tabelle sind die Namen NAM der Versende-Diskriminatoren F11 und F22 in einer ersten Spalte, sowie deren jeweiliges Ziel (oder jeweilige Ziele) zum Versenden von Ereignisinformationen und deren jeweiliger Status angegeben. Bei beiden Versende-Diskriminatoren F11, F22 ist als Ziel ME4 und als Status "ENA" (= Enabled) eingetragen. Es versteht sich, dass die Tabelle des Fensters WIN22 auch weitere Informationen enthalten kann, beispielsweise ein Applikationsprogramm des Servers ME4 als genaues Ziel und/oder weitere Zustandsinformationen, beispielsweise Locked/Unlocked und/oder Enabled/Disabled. Ferner ist es denkbar, dass die Angaben in der Tabelle des Fensters WIN22 modifizierbar sind, d.h. dass beispielsweise der Namen des Diskriminators F11 in "F13" geändert werden kann.

Die entsprechenden Änderungsinformationen versendet das Bedienmodul BC2 dann an das betreffende Management-Element.

Eine bevorzugte Variante der Erfindung sieht vor, dass beispielsweise über das Menü VW ein in der Figur nicht dargestelltes Fenster gestartet wird, bei dem z.B. das Bedienmodul BC2 eine Tabelle ausgibt, in der Daten aller jeweils bei einem Management-Element ME1 - ME7 vorhandenen Versende-Diskriminatoren oder in der Daten insgesamt aller bei den Management-Elementen ME1 - ME7 vorhandenen Versende-Diskriminatoren F11, F12, F2, F31-F34, F4, F51, F52 angegeben sind. Die jeweilige Tabelle kann vom Bedienmodul BC2 zur Ausgabe an einen Browser übermittelt werden und/oder in einer selbst erzeugten Darstellung, z.B. in einem selbst erzeugten Fenster, ausgegeben werden.

Das Bedienmodul BC3 des Bedienterminals BT3 fragt in einer der vorher genannten Weisen, beispielsweise unter Mitwirkung des Antwortmoduls BS4 Daten über Versende-Diskriminatoren bei den Management-Elementen ME1 - ME7 ab. Es ist auch möglich, dass das Bedienmodul BC3 die Daten selbst bei den betreffenden Management-Elementen ME1 - ME7 abfragt. Jedenfalls erzeugt das Bedienmodul BC3 aus diesen Daten die Karte MAP3 in einem Fenster WIN3 auf der Bedienoberfläche GUI3. Im Vergleich zu den Karten MAP1, MAP2 sind bei der Karte MAP3 die Symbole SME1 - SME7 für die Management-Elemente ME1 - ME7 unterschiedlich gestaltet und geben zumindest teilweise das oder die durch sie jeweils verwaltete(n) Netzelemente visuell wieder. Sie sind gewisser Weise aussagekräftiger:

Die Management-Elemente ME1 und ME2 verwalten jeweils eine Vermittlungsstelle als Netzelement. Dementsprechend sind die Symbole SME1, SME2 als Vermittlungsstellen-Symbole dargestellt. Das Management-Element ME3 verwaltet vorliegend zwei Vermittlungsstellen als Netzelemente, weshalb das Symbol SME3 des Management-Elements ME3 zwei Vermittlungsstellen andeutet. Das Symbol SME4 soll den Diensterechner SCP veranschaulichen, welcher durch das Management-Element ME4 verwaltet wird.

Die Symbole SV11 - SV52 für die Ereignisinformations-Kommunikationsverbindungen V11 - V52 entsprechen denen der Karte MAP1. Anhand der Karte MAP3 wird deutlich, dass eine hierarchische und/oder funktionale Darstellung der Management-Elemente ME1 - ME7 zwar zweckmäßig, jedoch nicht zwingend notwendig ist. Beispielsweise können die Management-Elemente vom jeweiligen Bedienmodul derart auf der jeweiligen Karte angeordnet werden, dass die Kommunikationsverbindungen zwischen diesen möglichst kreuzungsfrei dargestellt sind.

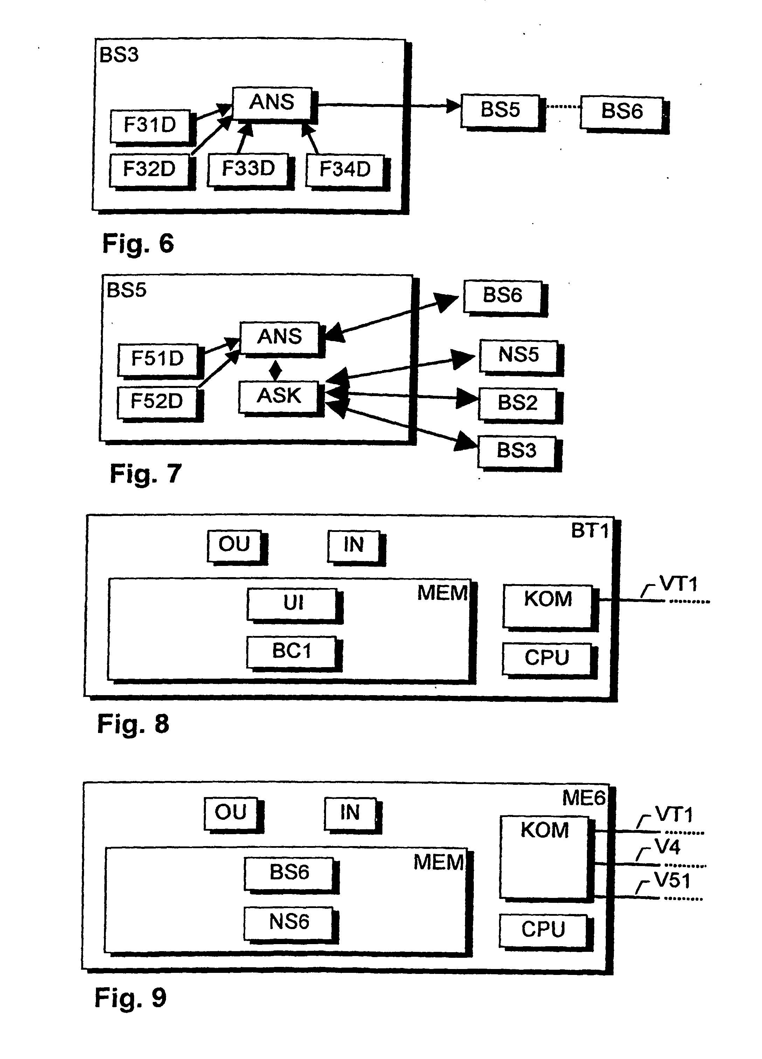

Die Figur 8 zeigt beispielhaft das Bedienterminal BT1, die Figuren 9 beispielhaft das Management-Element ME6. Die Bedienterminals BT2 und BT3 bzw. die Management-Elemente ME1 - ME5, ME7 sind funktional gleich aufgebaut wie das Bedienterminal BT1 bzw. das Management-Element ME6. Bei dem Bedienterminal BT1 sowie dem Management-Element ME6 handelt es sich prinzipiell um bekannte Rechner, die beispielsweise Steuermittel CPU, z.B. Prozessoren oder Prozessoranordnungen, Speichermittel MEM, beispielsweise RAM-Speicher (RAM = Random Access Memory), Festplattenlaufwerke oder dergleichen, sowie Ein-Ausgabemittel IN, Ol enthalten. Ferner enthalten die Rechner BT1, ME6 Kommunikationsmittel KOM, beispielsweise LAN-Schnittstellenkarten oder dergleichen. Bei den Eingabemitteln IN handelt es sich beispielsweise um eine Tastatur, eine Maus, ein Mikrofon oder dergleichen. Bei den Ausgabemitteln OU handelt es sich beispielsweise um einen Monitor, einen Lautsprecher oder dergleichen. Die Steuermittel CPU führten Programmcode von Programmmodulen, beim Bedienterminal BT1 beispielsweise dem Bedienoberflächenmodul UI sowie dem Bedienmodul BC1, aus, die in den Speichermitteln MEM abgelegt sind. Nicht dargestellt sind bei den Rechnern BT1, ME6 jeweils ein Betriebssystem, beispielsweise UNIX oder Windows-NT, das die Grundfunktionen des jeweiligen Rechners BT1, ME6 steuert und überwacht.

Für die in der Prozesskommunikation der Programmmodule innerhalb des Management-Systems, NMS, beispielsweise zur Kommunikation des Bedienmoduls BC1 mit dem Bedienoberflächenmodul UI und/oder mit dem Antwortmodul BS6 kann beispielsweise eine sogenannte ORB-Architektur vorgesehen sein (ORB = Object Request Broker), z.B. CORBA (= Common Object Request Broker Architecture).

## Patentansprüche

1. Verfahren zur Verwaltung eines Netzwerk-Management-Systems (NMS) mit Management-Elementen (ME1 - ME7), die mittels Versende-Diskriminatoren (F11, F12, F2, F31-F34, F4, F51, F52) Ereignisinformationen über Ereignisinformations-Kommunikationsverbindungen (V11, V12, V2, V31-V34, V4, V51, V52) versenden, anhand derer die Management-Elemente (ME1 - ME7) und/oder durch diese verwaltete Netzelemente (N1-N4, SCP) verwaltet werden,
**dadurch gekennzeichnet daß**
- ein Bedienmodul (BC1, BC2, BC3) für eine Auswahl von Management-Elementen (ME1 - ME7) zwischen diesen bestehende Ereignisinformations-Kommunikationsverbindungen (V11, V12, V2, V31-V34, V4, V51, V52) anhand von Daten (F31D-F34D, F51 D, F52D) über Versende-Diskriminatoren (F11, F12, F2, F31-F34, F4, F51, F52) ermittelt, welche bei den Management-Elementen (ME1 - ME7) die jeweiligen Ereignisinformations-Kommunikationsverbindungen (V11, V12, V2, V31-V34, V4, V51, V52) bedienen, und
- das Bedienmodul (BC1, BC2, BC3) die Management-Elemente (ME1 - ME7) der Auswahl sowie die zwischen diesen jeweils vorhandenen Ereignisinformations-Kommunikationsverbindungen (V11, V12, V2, V31-V34, V4, V51, V52) in einer ein Ereignisinformations-Netzwerk darstellenden Karte (MAP1, MAP2, MAP3) an einer Bedienoberfläche (GUI1-GUI3) des Netzwerk-Management-Systems (NMS) graphisch ausgibt.

2. Verfahren nach Anspruch 1, **dadurch gekennzeichnet, dass** das Bedienmodul (BC1, BC2, BC3) für mindestens eine Ereignisinformations-Kommunikationsver bindung (V11, V12, V2, V31-V34, V4, V51, V52) mindestens eine Information (NAM, TAR, STAT) bezüglich des an der Ereignisinformations-Kommunikationsverbindung (V11, V12, V2, V31-V34, V4, V51, V52) beteiligten Versende-Diskriminators (F11, F12, F2, F31-F34, F4, F51, F52) ermittelt und die mindestens eine Information an der Karte (MAP1, MAP2, MAP3) visualisiert.

3. Verfahren nach Anspruch 1, **dadurch gekennzeichnet, dass** die Management-Elemente (ME1 - ME7) der Auswahl als Symbole (SME1 - SME7) für Ereignisinformations-Netzknoten und/oder dass die Kommunikationsverbindungen (V11, V12, V2, V31-V34, V4, V51, V52) als Symbole (SV11, SV12, SV2, SV31-SV34, SV4, SV51, SV52) zwischen den Symbolen (SME1 - SME7) für die Management-Elemente (ME1 - ME7) ausgegeben werden.

4. Verfahren nach Anspruch 1, **dadurch gekennzeichnet, dass** das Bedienmodul (BC1, BC2, BC3) die Daten über die Versende-Diskriminatoren (F11, F12, F2, F31-F34, F4, F51, F52) der Management-Elemente (ME1 - ME7) der Auswahl zumindest teilweise in alphanumerischen Zeichenausgibt.

5. Verfahren nach Anspruch 1, **dadurch gekennzeichnet, dass** das Bedienmodul (BC1, BC2, BC3) die Daten über die Versende-Diskriminatoren (F11, F12, F2, F31-F34, F4, F51, F52) bei den Management-Elementen (ME1 - ME7) abfragt.

6. Verfahren nach Anspruch 1, **dadurch gekennzeichnet, dass** ein Abfrage-Teilmodul (REQ) des Bedienmoduls (BC1, BC2, BC3) die Daten über die Versende-Diskriminatoren (F11, F12, F2, F31-F34, F4, F51, F52) bei den Management-Elementen (ME1 - ME7) abfragt und ein Anzeige-Teilmodul (OUT) des Bedienmoduls (BC1, BC2, BC3) die Management-Elemente (ME1 - ME7) der Auswahl sowie die zwischen diesen jeweils vorhandenen Ereignisinformations-Kommunikationsverbindungen (V11, V12, V2, V31-V34, V4, V51, V52) graphisch ausgibt.

7. Verfahren nach Anspruch 1, **dadurch gekennzeichnet, dass** bei mindestens einem Management-Element (ME1 - ME7) ein dem Bedienmodul (BC1, BC2, BC3) zugeordnetes Antwortmodul (BS1 - BS7) Daten über mindestens einen Versende-Diskriminator (F11, F12, F2, F31-F34, F4, F51, F52) des Management-Elements (ME1 - ME7) an das Bedienmodul (BC1, BC2, BC3) meldet.

8. Verfahren nach Anspruch 1, **dadurch gekennzeichnet, dass** das Bedienmodul (BC1, BC2, BC3) bei einem Nameserver (NS6, NS5) des Netzwerk-Management-Systems (NMS) die Auswahl der Management-Elemente (ME1 - ME7) abfragt.

9. Bedienmodul (BC1, BC2, BC3) zur Verwaltung eines Netzwerk-Management-Systems (NMS) mit Management-Elementen (ME1 - ME7), die mittels Versende-Diskriminatoren (F11, F12, F2, F31-F34, F4, F51, F52) Ereignisinformationen versenden, anhand derer die Management-Elemente (ME1 - ME7) und/oder durch diese verwaltete Netzelemente (N1-N4, SCP) verwaltet werden,
- mit Analysemitteln (ANA) zum Ermitteln von Ereignisinformations-Kommunikationsverbindungen (V11, V12, V2, V31-V34, V4, V51, V52) zwischen einer Auswahl von Management-Elementen (ME1 - ME7) anhand von Daten über Versende-Diskriminatoren (F11, F12, F2, F31-F34, F4, F51, F52), welche bei den Management-Elementen (ME1 - ME7) die jeweiligen Ereignisinformations-Kommunikationsverbindungen (V11, V12, V2, V31-V34, V4, V51, V52) bedienen, und
- mit Ausgabemitteln (OUT) zum graphischen Ausgeben der Management-Elemente (ME1 - ME7) der Auswahl sowie den zwischen diesen jeweils vorhandenen Ereignisinformations-Kommunikationsverbindungen (V11, V12, V2, V31-V34, V4, V51, V52) in einer ein Ereignisinformations-Netzwerk darstellenden Karte (MAP1, MAP2, MAP3) an einer Bedienoberfläche (GUI1-GUI3) des Netzwerk-Management-Systems (NMS).

10. Bedienmodul (BC1, BC2, BC3) nach Anspruch 9, **dadurch gekennzeichnet, dass** es als Rechnerdes Netzwerk-Management-Systems (NMS) ausgestaltet ist.

11. Bedienmodul (BC1, BC2, BC3) nach Anspruch 9, **dadurch gekennzeichnet, dass** die Daten von der von dem Bedienmodul erzeugten Karte (MAP1, MAP2, MAP3) ausgehend mindestens eines Versende-Diskriminators (F11, F12, F2, F31-F34, F4, F51, F52) zumindest teilweise modifizierbar sind.

12. Bedienmodul (BC1, BC2, BC3) nach Anspruch 9 **dadurch gekennzeichnet, dass** es Programmcode enthält, der von einem Steuermittel eines Rechnersdes Netzwerk-Management-Systems (NMS) ausgeführt wird.

13. Netzwerk-Management-System (NMS) oder Rechner eines Netzwerk-Management-Systems (NMS) mit mindestens einem Bedienmodul (BC1, BC2, BC3) nach Anspruch 9.

14. Computer lesbares Speichermittel mit einem darauf gespeicherten Bedienmodulcode (BC1, BC2, BC3) zur Verwaltung eines Netzwerk-Management-Systems (NMS) mit Management-Elementen (ME1 - ME7), die mittels Versende-Diskriminatoren (F11, F12, F2, F31-F34, F4, F51, F52) Ereignisinformationen versenden, anhand derer die Management-Elemente (ME1 - ME7) und/oder durch diese verwaltete Netzelemente (N1-N4, SCP) verwaltet werden, wobei der Bedienmodulcode (BC1, BC2, BC3) so ausgestaltet ist, daß er, wenn er von Steuermitteln eines Rechners des Netzwerk-Management-Systems ausgeführt wird,
- Ereignisinformations-Kommunikationsverbindungen (V11, V12, V2, V31-V34, V4, V51, V52) zwischen einer Auswahl von Management-Elementen (ME1 - ME7) anhand von Daten über Versende-Diskriminatoren (F11, F12, F2, F31-F34, F4, F51, F52), welche bei den Management-Elementen (ME1 - ME7) die jeweiligen Ereignisinformations-Kommunikationsverbindungen (V11, V12, V2, V31-V34, V4, V51, V52) bedienen, ermittelt, und
- die Management-Elemente (ME1 - ME7) der Auswahl sowie die zwischen diesen jeweils vorhandenen Ereignisinformations-Kommunikationsverbindungen (V11, V12, V2, V31-V34, V4, V51, V52) in einer ein Ereignisinformations-Netzwerk darstellenden Karte (MAP1, MAP2, MAP3) an einer Bedienoberfläche (GUI1-GUI3) des Netzwerk-Management-Systems (NMS), graphisch ausgibt.

## Claims

1. Method for managing a network management system (NMS) with management elements (ME1 - ME7), which by means of forwarding discriminators (F11, F12, F2, F31-F34, F4, F51, F52) forward event information via event information communication connections (V11, V12, V2, V31-V34, V4, V51, V52), with the aid of which the management elements (ME1-ME7) and/or network elements (N1-N4, SCP) managed by them can be managed,
**characterised in that**
- an operator module (BC1, BC2, BC3) for a selection of management elements (ME1 - ME7) detects event information communication connections (V11, V12, V2, V31-V34, V4, V51, V52) existing between them with the aid of data (F31D-F34D, F51D, F52D) on forwarding discriminators (F11, F12, F2, F31-F34, F4, F51, F52) which operate the respective event information communication connections (V11, V12, V2, V31-V34, V4, V51, V52) in the management elements (ME1-ME7) and
- the operator module (BC1, BC2, BC3) graphically outputs the management elements (ME1 - ME7) of the selection and also the event information communication connections (V11, V12, V2, V31-V34, V4, V51, V52) existing between them in each case in a map (MAP1, MAP2, MAP3) representing an event information network on a user interface (GUI1-GUI3) of the network management system (NMS).

2. Method according to claim 1, **characterised in that** the operator module (BC1, BC2, BC3) detects for at least one event information communication connection (V11, V12, V2, V31-V34, V4, V51, V52) at least one item of information (NAM, TAR, STAT) relating to the forwarding discriminator (F11, F12, F2, F31-F34, F4, F51, F52) involved in the event information communication connection (V11, V12, V2, V31-V34, V4, V51, V52) and visualises the at least one item of information on the map (MAP1, MAP2, MAP3.

3. Method according to claim 1, **characterised in that** the management elements (ME1 - ME7) of the selection are output as symbols (SME1 - SME7) for event information network nodes and/or the communication connections (V11, V12, V2, V31-V34, V4, V51, V52) are output as symbols (SV11, SV12, SV2, SV31-SV34, SV4, SV51, SV52) between the symbols (SME1 - SME7) for the management elements (ME1 - ME7).

4. Method according to claim 1, **characterised in that** the operator module (BC1, BC2, BC3) outputs the data on the forwarding discriminators (F11, F12, F2, F31-F34, F4, F51, F52) of the management elements (ME1 - ME7) of the selection at least partially in alphanumeric characters.

5. Method according to claim 1, **characterised in that** the operator module (BC1, BC2, BC3) requests the data on the forwarding discriminators (F11, F12, F2, F31-F34, F4, F51, F52) from the management elements (ME1 - ME7).

6. Method according to claim 6, **characterised in that** a request partial module (REQ) of the operator module (BC1, BC2, BC3) requests the data on the forwarding discriminators (F11, F12, F2, F31-F34, F4, F51, F52) from the management elements (ME1 - ME7) and a display partial module (OUT) of the operator module (BC1, BC2, BC3) graphically outputs the management elements (ME1 - ME7) of the selection and also the event information communication connections (V11, V12, V2, V31-V34, V4, V51, V52) present between them in each case.

7. Method according to claim 1, **characterised in that** in at least one management element (ME1 - ME7) a response module (BS1 - BS7) assigned to the operator module (BC1, BC2, BC3) reports data on at least one forwarding discriminator (F11, F12, F2, F31-F34, F4, F51, F52) of the management element (ME1 - ME7) to the operator module (BC1, BC2, BC3).

8. Method according to claim 1, **characterised in that** the operator module (BC1, BC2, BC3) requests the selection of the management elements (ME1 - ME7) from a name server (NS6, NS5) of the network management system (NMS).

9. Operator module (BC1, BC2, BC3) for managing a network management system (NMS) with management elements (ME1 - ME7) which can forward event information by means of forwarding discriminators (F11, F12, F2, F31-F34, F4, F51, F52), with the aid of which the management elements (ME1-ME7) and/or network elements (N1-N4, SCP) managed by them can be managed,
- with analysers (ANA) for detecting event information communication connections (V11, V12, V2, V31-V34, V4, V51, V52) between a selection of management elements (ME1-ME7) with the aid of data on forwarding discriminators (F11, F12, F2, F31-F34, F4, F51, F52) which operate the respective event information communication connections (V11, V12, V2, V31-V34, V4, V51, V52) in the management elements (ME1 - ME7) and
- with output means (OUT) for the graphic output of the management elements (ME1 - ME7) of the selection and also the event information communication connections (V11, V12, V2, V31-V34, V4, V51, V52) present between them in each case in a map (MAP1, MAP2, MAP3) representing an event information network on a user interface (GUI1-GUI3) of the network management system (NMS).

10. Operator module (BC1, BC2, BC3) according to claim 9, **characterised in that** it is configured as a computer of the network management system (NMS).

11. Operator module (EC1, BC2, BC3) according to claim 9, **characterised in that** the data from the map (MAP1, MAP2, MAP3) generated by the operator module, starting from at least one forwarding discriminator (F11, F12, F2, F31-F34, F4, F51, F52), are at least partially modifiable.

12. Operator module (BC1, BC2, BC3) according to claim 9, **characterised in that** it contains a program code which is executed by a control means of a computer of the network management system (NMS).

13. Network management system (NMS) or computer of a network management system (NMS) with at least one operator module (BC1, BC2, BC3) according to claim 9.

14. Computer readable memory means, with an operator module code (BC1, BC2, BC3) stored on it for managing a network management system (NMS) with management elements (ME1-ME7) which forward event information by means of forwarding discriminators (F11, F12, F2, F31-F34, F4, F51, F52), with the aid of which the management elements (ME1-ME7) and/or network elements (N1-N4, SCP) managed by them are managed, wherein the operator module code (BC1, BC2, BC3) is configured in such a way that when it is executed by control means of a computer of the network management system (NMS), it
- detects event information communication connections (V11, V12, V2, V31-V34, V4, V51, V52) between a selection of management elements (ME1-ME7) with the aid of data on forwarding discriminators (F11, F12, F2, F31-F34, F4, F51, F52) which operate the respective event information communication connections (V11, V12, V2, V31-V34, V4, V51, V52) in the management elements (ME1 - ME7) and
- graphically outputs the management elements (ME1-ME7) of the selection and also the event information communication connections (V11, V12, V2, V31-V34, V4, V51, V52) present between them in each case in a map (MAP1, MAP2, MAP3) representing an event information network on a user interface (GUI1-GUI3) of the network management system (NMS).

## Revendications

1. Procédé pour administrer un système de gestion de réseau (NMS) comprenant des éléments de gestion (ME1-ME7) qui peuvent, au moyen de discriminateurs d'émission (F11, F12, F2, F31-F34, F4, F51, F52), envoyer des informations d'événement par le biais de liaisons de communication d'informations d'événement (V11, V12, V2, V31-V34, V4, V51, V52) à l'aide desquelles les éléments de gestion (ME1 - ME7) ct/ou les éléments de réseau (NA - N4, SCP) administrés par eux peuvent être administrés, **caractérisé en ce que**
- un module de commande (BC1, BC2, BC3) pour une sélection d'éléments de gestion (ME1-ME7) détermine entre ceux-ci les liaisons de communication d'informations d'événement (V11, V12, V2, V31 - V34, V4, V51, V52) existantes entre ceux-ci à l'aide de données (F31D-F34D, F51D, F52D) sur des discriminateurs d'émission (F11, F12, F2, F31-F34, F4, F51, F52), lesquels commandent auprès des éléments de gestion (ME1-ME7) les liaisons de communication d'informations d'événement (V11, V12, V2, V31-V34, V4, V51, V52) respectives, et
- le module de commande (BC1, BC2, BC3) public les éléments de gestion (ME1-ME7) de la sélection ainsi que les liaisons de communication d'informations d'événement (V11, V12, V2, V31-V34, V4, V51, V52) à chaque fois présentes dans une carte (MAP1, MAP2, MAP3) représentant un réseau d'informations d'événement sous forme graphique sur une interface utilisateur (GUI1-GUI3) du système de gestion de réseau (NMS).

2. Procédé selon la revendication 1, **caractérisé en ce que** le module de commande (BC1, BC2, BC3) détermine pour au moins une liaison de communication d'informations d'événement (V11, V12, V2, V31-V34, V4, V51, V52) au moins une information (NAM, TAR, STAT) concernant le discriminateur d'émission (F11, F12, F2, F31-F34, F4, F51, F52) participant à la liaison de communication d'informations d'événement (V11, V12, V2, V31 - V34, V4, V51, V52) et visualise l'au moins une information sur la carte (MAP1, MAP2, MAP3).

3. Procédé selon la revendication 1, **caractérisé en ce que** les éléments de gestion (ME1-ME7) de la sélection sont publiés sous la forme de symboles (SME1-SME7) pour des noeuds de réseau d'informations d'événement et/ou que les liaisons de communication (V11, V12, V2, V31 - V34, V4, V51, V52) sont publiées sous la forme de symboles (SV11, SV12, SV2, SV31 - SV34, SV4, SV51, SV52) entre les symboles (SME1-SME7) des éléments de gestion (ME1-ME7).

4. Procédé selon la revendication 1, **caractérisé en ce que** le module de commande (BC1, BC2, BC3) publie les données sur les discriminateurs d'émission (F11, F12, F2, F31-F34, F4, F51, F52) des éléments de gestion (ME1-ME7) de la sélection au moins partiellement en caractères alphanumériques.

5. Procédé selon la revendication 1, **caractérisé en ce que** le module de commande (BC1, BC2, BC3) interroge les données sur les discriminateurs d'émission (F11, F12, F2, F31-F34, F4, F51, F52) auprès des éléments de gestion (ME1-ME7).

6. Procédé selon la revendication 1, **caractérisé en ce qu'**un module partiel d'interrogation (REQ) du module de commande (BC1, BC2, BC3) interroge les données sur les discriminateurs d'émission (F11, F12, F2, F31 - F34, F4, F51, F52) auprès des éléments de gestion (ME1-ME7) et un module partiel d'affichage (OUT) du module de commande (BC1, BC2, BC3) publie sous forme graphique les éléments de gestion (ME1-ME7) de la sélection ainsi que les liaisons de communication d'informations d'événement (V11, V12, V2, V31-V34, V4, V51, V52) à chaque fois présentes entre eux.

7. Procédé selon la revendication 1, **caractérisé en ce qu'**au niveau d'au moins un élément de gestion (ME1-ME7) un module de réponse (BS1-BS7) associé au module de commande (BC1, BC2, BC3) envoie au module de commande (BC1, BC2, BC3) des données sur au moins un discriminateur d'émission (F11, F12, F2, F31-F34, F4, F51, F52) de l'élément de gestion (ME1-ME7).

8. Procédé selon la revendication 1, **caractérisé en ce que** le module de commande (BC1, BC2, BC3) interroge la sélection des éléments de gestion (ME1-MF7) auprès d'un serveur de nom (NS6, NS5) du système de gestion de réseau (NMS).

9. Module de commande (BC1, BC2, BC3) destiné à administrer un système de gestion de réseau (NMS) comprenant des éléments de gestion (ME1-MF7) qui, au moyen de discriminateurs d'émission (F11, F12, F2, F31 - F34, F4, F51, F52), envoient des informations d'événement à l'aide desquelles les éléments de gestion (ME1-ME7) et/ou les éléments de réseau (NA - N4, SCP) administrés par eux sont administrés,
- comprenant des moyens d'analyse (ANA) pour déterminer des liaisons de communication d'informations d'événement (V11, V12, V2, V31 - V34, V4, V51, V52) entre une sélection d'éléments de gestion (ME1-ME7) à l'aide de données sur des discriminateurs d'émission (F11, F12, F2, F31 - F34, F4, F51, F52), lesquels commandent auprès des éléments de gestion (ME1 - ME7) les liaisons de communication d'informations d'événement (V11, V12, V2, V31 - V34, V4, V51, V52) respectives, et
- comprenant des moyens de sortie (OUT) pour la publication graphique des éléments de gestion (ME1-ME7) de la sélection ainsi que des liaisons de communication d'informations d'événement (V11, V12, V2, V31 - V34, V4, V51, V52) à chaque fois présentes entre eux dans une carte (MAP1, MAP2, MAP3) représentant un réseau d'informations d'événement sur une interface utilisateur (GUI1-GUI3) du système de gestion de réseau (NMS).

10. Module de commande (BC1, BC2, BC3) selon la revendication 9, **caractérisé en ce qu'**il est réalisé sous la forme d'un système de gestion de réseau (NMS) informatisé.

11. Module de commande (BC1, BC2, BC3) selon la revendication 9, **caractérisé en ce que** les données de la carte (MAP1, MAP2, MAP3) générée par le module de commande peuvent au moins en partie être modifiées en partant d'au moins un discriminateur d'émission (F11, F12, F2, F31 -F34, F4, F51, F52).

12. Module de commande (BC1, BC2, BC3) selon la revendication 9, **caractérisé en ce qu'**il comprend un code de programme qui est exécuté par un moyen de commande d'un système de gestion de réseau (NMS) informatisé.

13. Système de gestion de réseau (NMS) ou ordinateur d'un système de gestion de réseau (NMS) comprenant au moins un module de commande (BC1, BC2, BC3) selon la revendication 9.

14. Moyen de mémorisation lisible par un ordinateur comprenant un code de module de commande (BC1, BC2, BC3) enregistré sur celui-ci et destiné à administrer un système de gestion de réseau (NMS) comprenant des éléments de gestion (ME1-ME7) qui, au moyen de discriminateurs d'émission (F11, F12, F2, F31 - F34, F4, F51, F52), envoient des informations d'événement à l'aide desquelles les éléments de gestion (ME1 - ME7) et/ou les éléments de réseau (NA - N4, SCP) administrés par eux sont administrés, le code de module de commande (BC1, BC2, BC3) étant configuré de telle sorte que, lorsqu'il est exécuté par les moyens de commande d'un ordinateur du système de gestion de réseau,
- détermine des liaisons de communication d'informations d'événement (V11, V12, V2, V31-V34, V4, V51, V52) entre une sélection d'éléments de gestion (ME1-ME7) à l'aide de données sur des discriminateurs d'émission (F11, F12, F2, F31-F34, F4, F51, F52), lesquels commandent auprès des éléments de gestion (ME1-ME7) les liaisons de communication d'informations d'événement (V11, V12, V2, V31 - V34, V4, V51, V52) respectives, et
- publie sous forme graphique les éléments de gestion (ME1-ME7) de la sélection ainsi que des liaisons de communication d'informations d'événement (V11, V12, V2, V31 - V34, V4, V51, V52) à chaque fois présentes entre eux dans une carte (MAP1, MAP2, MAP3) représentant un réseau d'informations d'événement sur une interface utilisateur (GUI1-GUI3) du système de gestion de réseau (NMS).
